# EUROPÄISCHE PATENTANMELDUNG

(11) **EP 0 593 960 A1**
(43) Veröffentlichungstag der Anmeldung: **27.04.1994**
(21) Anmeldenummer: 93115869.5
(22) Anmeldetag: 01.10.1993
(51) Int. Cl.: B29C 45/17

(54) **Antriebseinheit für eine Spritzgiessmaschine**

(30) Priorität: 17.10.1992 DE 4235060
(71) Anmelder: Hemscheidt Maschinentechnik Schwerin GmbH & Co., D-19026 Schwerin (DE)
(72) Erfinder: Wegmann, Roland, Dr.-Ing., D-19053 Schwerwin (DE); Wüsthoff, Kai-Uwe, Dipl.-Ing., D-19230 Schwaberow (DE)
(74) Vertreter: Garberding, Manfred

(57) **Zusammenfassung**

Die Erfindung betrifft eine Antriebseinheit (1) für eine Spritzgießmaschine zur Kunststoffverarbeitung, bestehend aus mindestens einem von einem Gebläse (1.2) gekühlten Elektromotor (1.1), der eine Pumpe (1.3) antreibt. Die Antriebseinheit (1) ist im Untersatz (2) für die Spritzeinheit an der Rückseite (R) und die dazugehörige Schaltausrüstung in einem Schaltschrank (4) an der Bedienseite (B) angeordnet. Aufgabe der Erfindung ist es, ohne bauliche Vergrößerung des Untersatzes (2) durch kostengünstige sekundäre Maßnahmen eine Geräuschsenkung für die Antriebseinheit (1), ohne Einschränkung der Kühlfunktion des Gebläses (1.2) für den Elektromotor (1.1), zu erreichen. Dazu wird vorgeschlagen, einen Luftansaugkanal (8) zum Gebläse (1.2) durch den Schaltschrank (4) zu führen. In einen abgetrennten Zwischenraum (9), der sich zwischen Schaltschrank (4) und Antriebseinheit (1) befindet und mit Luftleitblechen (9.1) versehen ist, wird die Abluft vom Gebläse eingeleitet und danach aus der Auslaßöffnung (7) im Untersatz (2) abgeführt.

## Beschreibung

Die Erfindung betrifft eine Antriebseinheit für eine Spritzgießmaschine zur Kunststoffverarbeitung, die aus mindestens einem luftgekühlten Elektromotor mit mindestens einer Förder- und Regelpumpenkombination besteht. Die Antriebseinheit ist im Untersatz für die Spritzeinheit, an der Rückseite der Spritzgießmaschine angeordnet. An der Vorderseite vom Untersatz, die gleichzeitig die Bedienseite für die Spritzgießmaschine ist, befindet sich der Schaltschrank, in dem die Schaltausrüstung für die gesamte Maschinensteuerung integriert ist. Problematisch ist dabei, daß mit zunehmender Größe der zu spritzenden Formteile sich auch der Leistungsbedarf für die hydraulisch betriebenen Verbraucher der Schließeinheit und Spritzeinheit erhöht. Daraus resultiert eine entsprechend größere Auslegung der Elektromotore und Pumpen für die Antriebseinheit, was zwangsläufig auch zu einer höheren Lärmbelästigung führt. In der Praxis versucht man nun durch geeignete primäre und sekundäre Maßnahmen eine Geräuschsenkung nach außen hin zu erreichen. Eine übliche sekundäre Maßnahme besteht darin, für die gesamte Antriebseinheit (Elektromotor und Pumpenkombination) eine Kapselung vorzunehmen. Da der Elektromotor durch ein Gebläse mit Luft gekühlt wird, was zu einer erheblichen Lärmbelästigung führt, ist es gleichzeitig notwendig, die Kapselung mit Luftansaug- und Luftauslaßöffnungen zu versehen. Beispiele dafür sind die Spritzgießmaschinen der M-Baureihe von der Firma Krauss-Maffei Kunststofftechnik in München gemäß Prospekt 4.OB 2. Aufl. 4/91. Ein ähnliches Konzept weisen die Spritzgießmaschinen der Fa. Mannesmann Demag Kunststofftechnik in den Prospektunterlagen 7404-0004T 10/92 der Baureihe ERGOtech auf. Das führt zwangsläufig dazu, daß die mit der Kapselung erreichte Geräuschsenkung teilweise wieder zunichte gemacht wird. Eine andere Möglichkeit, die in der Praxis zur Anwendung kommt, sieht vor, nur die Pumpe zu kapseln. Solche Lösungen sind beispielsweise aus Prospektunterlagen S8 Nov. 92 über Spritzgießmaschinen der Baureihe Serie OTTO-LH der Fa. Sandretto zu entnehmen. Auch aus den Prospektunterlagen 3.OBl 1. Auflage 6/92 der Firma Krauss Maffei zu Spritzgießmaschinen der Baureihe Bl sind solche Lösungen bekannt. Das hat zur Folge, daß bei großen Antriebseinheiten die Probleme bestehen, einerseits Pumpe und Motor elastisch zu lagern, damit kein Körperschall auf das Maschinengestell und die Kapselung übertragen wird und andererseits den notwendigen Spalt zwischen Kapselung und Antriebswelle schalldicht abzuschließen. Bei Berücksichtigung dieser Faktoren kommt hinzu, daß ausreichende Montagebedingungen gewährleistet sein müssen. Bei dieser Lösung ist jedoch zu verzeichnen, daß mit zunehmender Größe des Elektromotors eine erhebliche Geräuschentwicklung durch das Gebläse entsteht, womit ebenfalls die bereits erreichten Effekte zunichte gemacht werden.

Aufgabe der Erfindung ist es, ohne bauliche Vergrößerung des Untersatzes der Spritzeinheit durch kostengünstige sekundäre Maßnahmen eine Geräuschsenkung für die Antriebseinheit zu erreichen, wobei die Kühlfunktion des Gebläses als ein Geräuschverursacher nicht eingeschränkt wird.

Diese Aufgabe wird dadurch gelöst, daß der Luftansaugkanal zum Gebläse durch den Schaltschrank geführt wird. Zwischen dem Schaltschrank und dem Raum für die Antriebseinheit wird in einen abgetrennten Zwischenraum mit Luftleitblechen die Abluft vom Gebläse eingeleitet, die dann aus dem Untersatz aus der Auslaßöffnung abgeführt wird.

In einer anderen Ausführungsvariante ist vorgesehen, daß der Luftansaugkanal in einem Raum angeordnet ist, der sich zwischen dem Schaltschrank und dem Zwischenraum zur Antriebseinheit befindet. Als vorteilhaft wird es angesehen, wenn die Abluft über eine untere Öffnung im Untersatz abgeführt wird. Bei Spritzgießmaschinen mit sehr großem Spritzvolumen und sehr großen Schließkräften kann es erforderlich sein, zwei Antriebseinheiten parallel nebeneinander im Untersatz quer zur Längsrichtung anzuordnen. Der Luftansaugkanal kann dann ebenfalls durch den Schaltschrank zu den Gebläsen bzw. in einen hinter dem Schaltschrank befindlichen Raum geführt werden. Die Anordnung des Zwischenraumes für die Ableitung der Abluft ist dann an die jeweiligen Platzverhältnisse anzupassen.

Die Vorteile der erfindungsgemäßen Lösung bestehen darin, daß durch den langen Luftansaugkanal und dessen mehrfache Umlenkung das Ansauggeräusch vom Gebläse des Elektromotors und die Geräusche die von der Antriebseinheit ausgehen so stark gedämpft werden, daß sie außerhalb der Maschine kaum noch wahrnehmbar sind. Ein weiterer Vorteil besteht darin, daß von der gefilterten angesaugten Kühlluft, beim Durchströmen durch den Schaltschrank, die dort vorhandenen Schaltelemente, die einer Kühlung bedürfen, bereits gekühlt werden. Dadurch ist es möglich, ganz oder teilweise auf Schaltschrankkühleinrichtungen zu verzichten. Gleichzeitig werden an die elektronischen Baugruppen geringere thermische Anforderungen gestellt und sie genügen eher den klimatischen Bedingungen in anderen Regionen, wodurch sich Kosten sparen lassen. Durch das Einleiten der Abluft in einen Zwischenraum mit mehrfacher Umlenkung, gegenüber der direkten Ableitung, werden die Abluftgeräusche und die Geräusche, die von der Antriebseinheit ausgehen, in gleicher Weise stark nach außen hin gedämpft. Mit der erfindungsgemäßen Lösung wird so eine Reduzierung der abgestrahlten Schallenergie von ca. 10 dB erreicht.

Nachstehend wird die Erfindung an einem Ausführungsbeispiel erläutert. In den Zeichnungen sind dargestellt
- Fig. 1: Draufsicht als Schnittdarstellung auf eine Antriebseinheit im Untersatz der Spritzeinheit mit Luftansaugkanal im Schaltschrank
- Fig. 2: Draufsicht gemäß Figur 1 mit Luftansaugkanal zwischen dem Schaltschrank und dem Zwischenraum zur Antriebseinheit
- Fig. 3: Draufsicht als Schnittdarstellung mit zwei Antriebseinheiten im Untersatz der Spritzeinheit

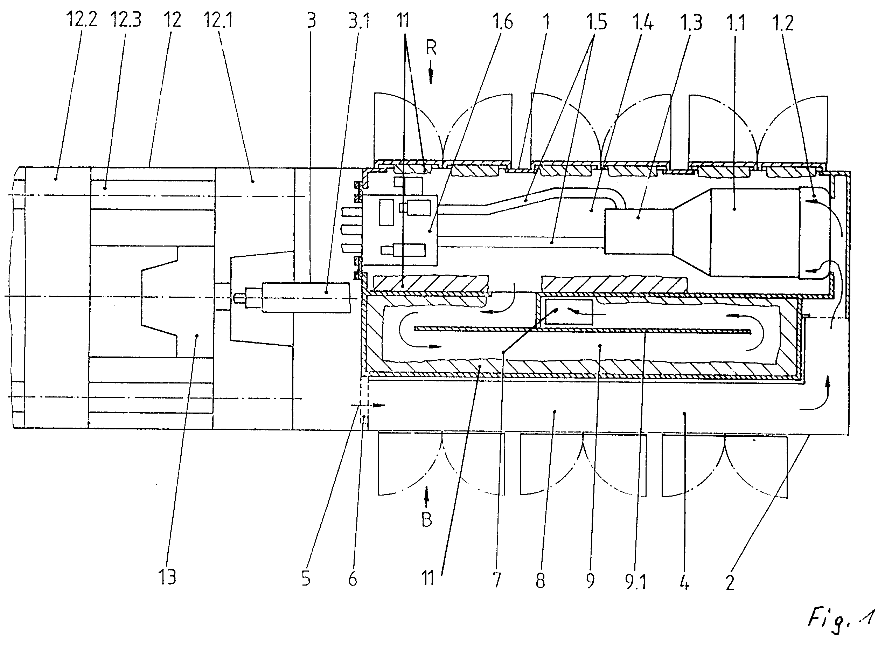

In Figur 1 ist in einer Draufsicht die Teilansicht einer Spritzgießmaschine zur Kunststoffverarbeitung erkennbar. Im Untersatz 2 für die Spritzeinheit 3, von der nur der Spritzkopf 3.1 sichtbar dargestellt ist, befindet sich an der Rückseite R der Spritzgießmaschine die Antriebseinheit 1 bestehend aus dem Elektromotor 1.1 mit dem Gebläse 1.2 und der Pumpe 1.3. Von der Pumpe 1.3 führen Leitungen 1.5 zum Steuerblock 1.6. An der Bedienseite B der Spritzgießmaschine ist im Untersatz 2 der Schaltschrank 4 ohne Schaltausrüstung erkennbar. Von der Bedienseite B aus betrachtet befindet sich links vom Untersatz 2 die Schließeinheit 12 bestehend aus der festen Werkzeugaufspannplatte 12.1, der beweglichen Werkzeugaufspannplatte 12.2 die über Säulen 12.3 miteinander verbunden sind und ein Formwerkzeug 13 aufnehmen. Die Schließeinheit 12 ist nicht Gegenstand der Erfindung und wurde nur zum besseren Verständnis mitgezeichnet. Stirnseitig befindet sich im Schaltschrank 4, angrenzend zur Schließeinheit 12, die Ansaugöffnung 5 mit dem Luftfilter 6.

Der Luftansaugkanal 8 verläuft direkt durch den Schaltschrank 4, wodruch die Elemente der Schaltausrüstung, für die eine Kühlung erforderlich ist, bereits gekühlt werden und die dafür an sich erforderliche Anzahl von Lüftern reduziert oder eingespart werden kann. Der Raum 1.4 für die Antriebseinheit 1 an der Rückseite R ist durch einen abgeteilten Zwischenraum 9, der durch Luftleitbleche 9.1 unterteilt ist, vom Schaltschrank 4 an der Bedienseite B getrennt. Im Ausführungsbeispiel in Figur 1 füllt der Schaltschrank 4 einen Teil der äußeren Stirnseite des Untersatzes aus. Dadurch wird der Luftstrom in Pfeilrichtung umgelenkt, an der Stirnseite entlang geführt und im Bereich der Antriebseinheit 1 stirnseitig erneut umgelenkt und vom Gebläse 1.2 der Antriebseinheit 1 im Raum 1.4 angesaugt. Die mehrfache Umlenkung des Luftstromes im Luftansaugkanal 8, der mit einer Schallisolierung 11 versehen ist, führt dazu, daß keine Antriebs- und Luftansauggeräusche nach außen dringen können. Vom Raum 1.4 strömt die erwärmte Abluft vom gekühlten Elektromotor 1.1 in den durch Luftleitbleche 9.1 unterteilten Zwischenraum 9 zur Auslaßöffnung 7, die vorzugsweise in den Bodenbereich, unterhalb des Untersatzes 2 mündet. Da der Raum 1.4 nach außen und der Zwischenraum 9 ebenfalls mit einer Schallisolierung 11 ausgestattet sind, werden durch die vorgeschlagene Anordnung, die problemlos variiert werden kann, die Abluftgeräusche des Gebläses 1.2 sowie alle Geräusche, die von der Antriebseinheit 1 verursacht werden, besonders gut gedämpft.

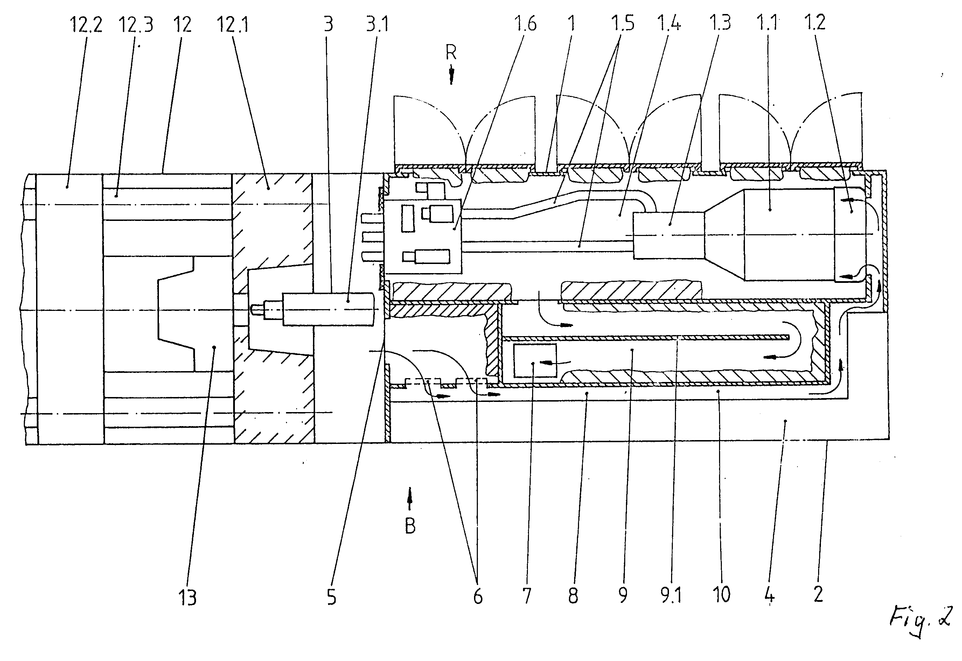

In Figur 2 ist gegenüber Figur 1 eine abgewandelte Ausführungsform dargestellt, die sich lediglich dadurch unterscheidet, daß sich die Ansaugöffnung 5 stirnseitig neben dem Schaltschrank 4 befindet. Der Luftansaugkanal 8 verläuft zwischen dem Schaltschrank 4 und dem Zwischenraum 9, der als Raum 10 bezeichnet ist, wodurch nur eine indirekte Kühlung der im Schaltschrank 4 befindlichen Schaltausrüstung erfolgt.

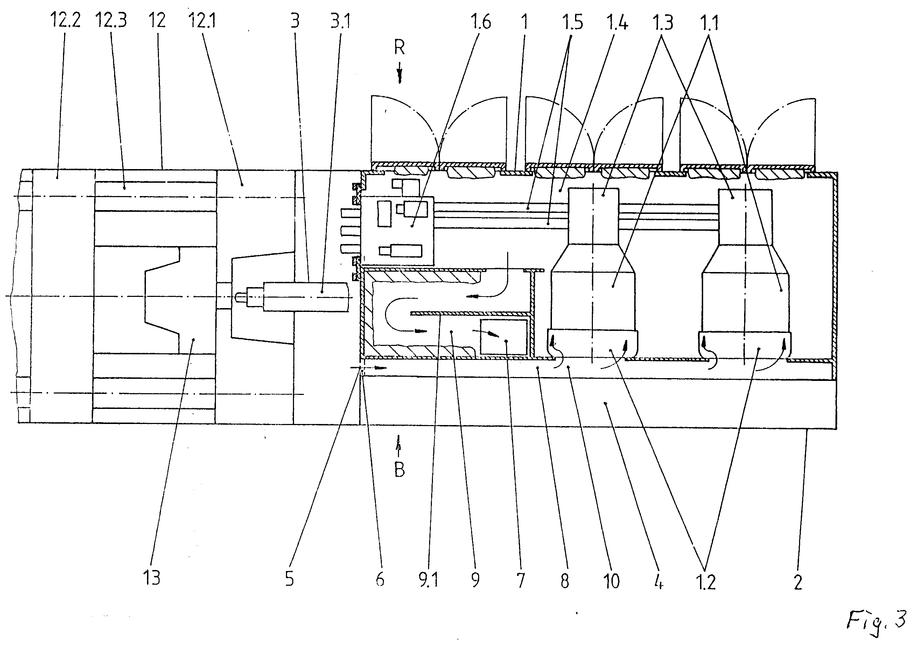

In Figur 3 ist eine weitere Ausführungsform dargestellt, in der im Untersatz 2, quer zu dessen Längsrichtung zwei Antriebseinheiten 1 angeordnet sind. Der Luftansaugkanal 8 verläuft ähnlich wie in Figur 2 teilweise in einem gesonderten Raum 10 zwischen dem Schaltschrank 4 und dem Zwischenraum 9. Durch die quergestellte Anordnung der beiden Antriebseinheiten 1, muß der Zwischenraum 9 mit den Luftleitblechen 9.1 für die Abluft, konstruktiv anders angeordnet werden.

### Aufstellung der verwendeten Bezugszeichen

- 1: - Antriebseinheit
- 1.1: - Elektromotor
- 1.2: - Gebläse
- 1.3: - Pumpe
- 1.4: - Raum
- 1.5: - Leitungen
- 1.6: - Steuerblock
- 2: - Untersatz
- 3: - Spritzeinheit
- 3.1: - Spritzkopf
- 4: - Schaltschrank
- 5: - Ansaugöffnung
- 6: - Luftfilter
- 7: - Auslaßöffnung
- 8: - Luftansaugkanal
- 9: - Zwischenraum
- 9.1: - Leitblech
- 10: - Raum
- 11: - Schallisolierung
- 12: - Schließeinheit
- 12.1: - Werkzeugaufspannplatte (fest)
- 12.2: - Werkzeugaufspannplatte (bewegl.)
- 12.3: - Säulen
- 13: - Formwerkzeug
- R: - Rückseite
- B: - Bedienseite

## Patentansprüche

1. Antriebseinheit für eine Spritzgießmaschine zur Kunststoffverarbeitung bestehend aus mindestens einem von einem Gebläse gekühlten Elektromotor, der eine Pumpe antreibt, die im Untersatz für die Spritzeinheit an der Rückseite der Spritzgießmaschine angeordnet ist und einer in einem Schaltschrank integrierten Schaltausrüstung, die im Untersatz an der Bedienseite der Spritzgießmaschine angeordnet ist, wobei die Frischluft für das Gebläse des Elektromotors über eine im Untersatz befindliche Ansaugöffnung und nachfolgende Filter angesaugt wird und die Abluft an einer anderen Stelle im Untersatz über eine Auslaßöffnung wieder abgeführt wird, dadurch gekennzeichnet, daß
- ein Luftansaugkanal (8) zum Gebläse (1.2) durch den Schaltschrank (4) geführt wird,
- zwischen Schaltschrank (4) und Antriebseinheit (1) in einen abgetrennten Zwischenraum (9) mit Luftleitblechen (9.1) die Abluft vom Gebläse (1.2) eingeleitet und danach aus der Auslaßöffnung (7) im Untersatz (2) abgeführt wird.

2. Antriebseinheit nach Anspruch 1, dadurch gekennzeichnet, daß der Luftansaugkanal (8) in einem Raum (10) angeordnet ist, der sich zwischen dem Schaltschrank (4) und dem Zwischenraum (9) zur Antriebseinheit (1) befindet.

3. Antriebseinheit nach Anspruch 1 und 2, dadurch gekennzeichnet, daß die Abluft über eine untere Öffnung (7) im Untersatz (2) abgeführt wird.
